# EUROPÄISCHE PATENTSCHRIFT

(11) **EP 2 457 767 B1**
(45) Veröffentlichungstag und Bekanntmachung des Hinweises auf die Patenterteilung: **30.01.2013**
(21) Anmeldenummer: 10460042.4
(22) Anmeldetag: 26.11.2010
(51) Int. Cl.: B60P 3/06, B62D 53/06

(54) **Der Sattellastanhangewagen zur Beforderung schienengebundener Wagen und die Verfahren der Verladung des schienengebundenen Wagens**
A semi-trailer load carriage for rail-bound vehicles and method of loading the rail car
Chariot de chargement semi-remorque pour le transport ferroviaire de véhicules et procédure de chargement du wagon

(43) Veröffentlichungstag der Anmeldung: 30.05.2012
(73) Patentinhaber: Autoryzowana Stacja Obslugi, 89-100 Naklo n. Not (PL)
(72) Erfinder: Mieczkowski, Piotr, 89-100 Naklo n. Not. (PL)
(74) Vertreter: Wojcieszko, Jerzy

(56) Entgegenhaltungen:
- EP-A1- 1 122 151
- EP-A2- 1 621 450
- JP-A- 60 029 344
- US-A- 4 373 857
- US-A- 6 109 845

## Beschreibung

Die Erfindung betrifft einen mehrachsigen Sattelauflieger mit tiefliegendem Boden, zum Transport von Schienenfahrzeugen und ein Verfahren zur Verladung eines Schienenfahrzeugs auf den Sattelauflieger, insbesondere eines langen, gelenkigen, für den Stadtverkehr bestimmten Niederflur-Schienenfahrzeugs.

Bekannte mehrachsige, zur Beförderung von Schienenfahrzeugen bestimmte Niederflur-Sattelauflieger mit einem schiebbaren, mit einem Schwanenhals endenden Teil zur Verlängerung des Anhängers und zur Verbindung mit Sattelschlepper, sind zur Beförderung von langen, gelenkigen Niedrigflur-Schienenfahrzeugen mit einer Länge bis zu 34 Metern für den Stadtverkehr nicht geeignet. Ein solches Fahrzeug ist nicht imstande eine Kreisverkehrsinsel von kleinem Durchmesser zu befahren. Dabei werden traditionelle Kreuzungen aus Verkehrssicherheitsgründen immer häufiger durch solche Kreisverkehrsinseln ersetzt. Der Durchmesser von solchen "kleinen Kreisverkehrsinseln" beträgt 3 bis 5 Meter. Dadurch wird das Umfahren einer solchen Insel durch einen zum Transport von langen Schienenfahrzeugen (die an Ort und Stelle geliefert und auf Schienen des städtischen Straßenbahnnetzes aufgestellt werden müssen) bestimmten Sattelauflieger praktisch unmöglich. Der aus der Patentbeschreibung FR 772879 und EP 1 621 450 bekannter Anhänger sind zur Beförderung von langen, gelenkigen, für den Stadtverkehr bestimmten Niedrigflur-Schienenfahrzeugen ungeeignet.

Der Erfindung liegt die Aufgabe zugrunde, einen mehrachsigen Sattelauflieger zu entwickeln, insbesondere zur Beförderung eines langen, gelenkigen, für den Stadtverkehr bestimmten Niedrigflur-Schienenfahrzeugs mit verschiedenen Schienenabständen, welcher Sattelauflieger "kleine Kreisverkehrsinseln" umfahren kann, ausgestattet mit einem Steuerungssystem im Gelenkteil, welches Steuerungssystem die Führung des Fahrzeugs auf geraden Straßenabschnitten erleichtern soll. Zu den Aufgaben der Erfindung gehört auch die Entwicklung eines neuen Verfahrens zur Verladung eines Schienenfahrzeugs auf den Sattelauflieger, welches Verfahren den Verladevorgang erleichtern und gleichzeitig die Herstellungskosten von Verladungshilfsvorrichtungen senken soll.

Diese Aufgabe ist gelöst durch einen mehrachsigen, zur Beförderung von langen Schienenfahrzeugen bestimmten Sattelauflieger mit einem schiebbaren, in einen Schwanenhals auslaufenden Teil zur Verlängerung des Anhängers und zur Verbindung mit dem Sattelschlepper. Erfindungsgemäß zeichnet sich der Sattelauflieger dadurch aus, dass das schiebbare Teil mit dem Anhänger gelenkig verbunden ist, wobei der Anhänger Achsen mit Rädern aufweist und auf der ganzen Länge der oberen Fläche des schiebbaren Teils sowie des Anhängers in wenigstens zwei einstellbaren Standardabständen Fahrschienen angeordnet sind, und wobei die an dem schiebbaren Teil befindlichen Fahrschienen auf seinen beiden Seiten auf Drehstützen aufgesetzt sind, welche ein ungehindertes Hineinschieben des schiebbaren Teils in den Anhänger ermöglichen, und wobei an dem eine Drehscheibe enthaltenden Teil des Schwanenhalses ein stetig regulierbarer Arm vorgesehen ist, der am Drehpunkt der Drehscheibe gelagert ist und in Verbindung mit Kraftverstärkern eines Lenkungssystems für Räder nach Bedarf für Winkeländerungen sorgt.

Darüber hinaus zeichnet sich die Erfindung dadurch aus, dass die gelenkige Verbindung des schiebbaren Teils mit dem Anhänger einen normtypischen Königszapfen aufweist, der an einem für den Lastkraftwagen normtypischen Sattel angebracht ist, welcher Sattel wiederum verstellbar mithilfe von Schrauben am Fahrgestell des Anhängers befestigt ist, wodurch die Regulierung der Schwenkbewegung des schiebbaren Teils gegenüber dem Anhänger ermöglicht ist. Dabei ist das bewegliche Teil des Sattels beidseitig mit schräg geformten, zur Drehbegrenzung vorgesehenen Vorsprüngen ausgestattet.

Ein anderes wesentliches Merkmal der erfindungsgemäßen Lösung besteht darin, dass die auf beiden Seiten des schiebbaren Teils aufgesetzten Drehstützen, an denen die Schienen befestigt sind, zwischen einer senkrechten Lage und einer parallelen Lage gegenüber dem schiebbaren Teil schwenkbar sind, wobei die Stützen wenigstens zwei Abstände für das Aufsetzen der Schienen aufweisen, welche Abstände an zwei am Anhänger vorgesehene, identische Abstände zwischen C-Profilen zur Aufnahme von Schienen angepasst sind.

Ein anderes wesentliches Merkmal der Erfindung betrifft die Konstruktion des schiebbaren Teils. Das schiebbare Teil ist an seinem Ende mit den Schubwiderstand verkleinernden Rollen versehen.

Ein weiteres wesentliches Merkmal der Erfindung besteht in der Konstruktionsverbesserung der Drehscheibe des Schwanenhalses durch Einführung einer stetigen Schmierung einer Lenkung-Kolbenstange, die in einen aus zwei Teilen bestehenden Ölbehälter eingebaut ist. Die Teile sind über einen Hydraulikschlauch mit einem Abdeckteil der Kolbenstange verbunden, an dem eine Öffnung eingearbeitet ist. Die Öffnung liegt an einer Verbindungsstelle der Kolbenstange mit einer Hülse, in die die Kolbenstange eingesetzt ist.

Wesentlich für die Erfindung ist, dass an der gelenkigen Verbindung des schiebbaren Teils mit dem Sattelauflieger ein zusätzliches, aus zwei hydraulischen Kraftverstärkern bestehendes Steuerungssystem installiert ist. Das Steuerungssystem weist zwei Hydrauliköl-Kammern auf, die miteinander über einen Hydraulikschlauch mit Sperrventil verbunden sind. Das Sperrventil ist wiederum von dem Fahrerhaus des Sattelschleppers betätigbar.

Vorteilhaft ist, dass das Sperrventil kabellos von dem Fahrerhaus des Sattelschleppers mithilfe eines kabellosen Senders ferngesteuert ist. Der Sender ist über einen Schalter betätigbar. Das Öffnen und Schließen des Sperrventils erfolgt über einen im Sperrventil befindlichen Signalempfänger.

Das zusätzliche Steuerungssystem zeichnet sich auch dadurch aus, dass die an der gelenkigen Verbindung angeordneten Kraftverstärker drehbar an den Verbindungsstellen der Arme einer Drehplattform des schiebbaren Teils befestigt sind, und dass die hydraulischen Kraftverstärker herausschiebbare Kolben aufweisen, die drehbar an ihren Verbindungsstellen mit dem Anhänger verbunden sind.

Das Verfahren zur Verladung eines Schienenfahrzeugs auf den Sattelauflieger zeichnet sich gemäß der Erfindung dadurch aus, dass das schiebbare Teil von dem Schwanenhals abgekoppelt und das Schienenfahrzeug von der Seite des schiebbaren Teils hineingezogen wird, wobei das schiebbare Teil vorher nach unten verschwenkt und mit einer kurzen Auffahrrampe verbunden wird, der Anhänger in Richtung schiebbares Teil mithilfe der Achsregulierung der Achse mit Rädern des Anhängers geneigt wird, das Hineinziehen des Schienenfahrzeugs mithilfe eines einerseits mit dem Schienenfahrzeug und andererseits mit einer Seilwinde gekoppelten Seils erfolgt, das entlang des Gleises geführt ist, wobei die Seilwinde im hinteren Teil des Anhängers angeordnet ist, und wobei im hinteren Teil des Anhängers ein an die Konstruktion des Anhängers befestigter Begrenzer angeordnet ist, mit dem ein übermäßiges Hineinziehen des Schienenfahrzeugs gehindert wird.

Ein weiteres wesentliches Merkmal des erfindungsgemäßen Verfahrens zur Verladung besteht darin, dass man das gelenkige Schienenfahrzeug an dem Sattelauflieger derart befestigt, dass das Gelenk des Schienenfahrzeugs sich oberhalb der gelenkigen Verbindung des schiebbaren Teils mit dem Anhänger befindet.

Der erfindungsgemäße Sattelauflieger zum Transport von Schienenfahrzeugen und das Verfahren zur Verladung eines Schienenfahrzeugs auf den Sattelauflieger bringt erhebliche Vorteile für das Fuhrunternehmen, das sich mit dem Transport von Schienenfahrzeugen, insbesondere von gelenkigen Straßenbahnen beschäftigt, die eine Länge von bis zu 34 Metern erreichen können. Diese Vorteile der Erfindung bestehen darin, dass ein Manövrieren an engen Kreisverkehrsinseln und Wegkreuzungen erheblich erleichtert ist.

Nachfolgend werden andere Vorteile der Erfindung beschrieben:
1) Die gewählte Konstruktion des schiebbaren Teils und das Verfahren zur Verladung eines Schienenfahrzeugs auf den Sattelauflieger ermöglichen eine vereinfachte Verladung und tragen einer Kostensenkung bei durch die Verwendung einer kürzeren Auffahrrampe;
2) Der Einsatz einer Regulierung der gelenkigen Verbindung des schiebbaren Teils mit dem Anhänger ermöglicht das Verschwenken um einen maximalen Schwenkwinkel bis 27°, mit dem ein kleinerer Drehradius des ganzen, aus dem Sattelschlepper und Sattelauflieger mit Schwanenhals bestehenden Fahrzeug-Satzes erreicht werden kann;
3) Die beschriebene gelenkige Verbindung erfordert keine übermäßig große Schwenkbewegung der Achse des Sattelaufliegers. Dies ist durch einen regulierbaren, am sogenannten "Schwanenhals" angeordneten, mit dem Sattelschlepper verbundenen Arm des Lenkungssystems ermöglicht. Durch das Ersetzen von bisher bekannten, steifen Armen durch einen stetig regulierbaren Arm wird eine Verringerung des Achsdrehwinkels im Sattelauflieger erreicht, weil ein Teil der Drehung von der gelenkigen, zwischen dem schiebbaren Teil und dem Anhänger befindlichen Verbindung übernommen wird;
4) Die Verwendung von an dem schiebbaren Teil eingesetzten Drehstützen sowie der Einsatz von zwei unterschiedlichen Schienenabständen an dem schiebbaren Teil und entsprechend von zwei unterschiedlichen Schienenabständen an dem Anhänger ermöglicht die Verladung und Beförderung der Schienenfahrzeugen, die ebenfalls zwei unterschiedliche Schienenabstände aufweisen, ohne Demontage der Fahrschienen;
5) Der Einsatz von hinteren Rollen am schiebbaren Teil verringert erheblich den Schubwiderstand und erleichtert damit die Verlängerung oder Verkürzung des gesamten, aus dem Anhänger und dem schiebbaren Teil bestehenden Gelenkfahrzeuges;
6) Der Einsatz von stetiger Schmierung der Kolbenstange an der Drehscheibe des Schwanenhalses verlängert die Lebensdauer des Systems;
7) Die Installierung eines zusätzlichen Steuerungssystems an der gelenkigen Verbindung des schiebbaren Teils mit dem Anhänger eliminiert die oben beschriebenen Unannehmlichkeiten bei der Geradeausfahrt. Das zusätzliche Steuerungssystem besteht aus zwei hydraulischen Kraftverstärkern, deren Hydrauliköl-Kammern miteinander über einen Hydraulikschlauch mit Sperrventil verbunden sind. Das Sperrventil ist von dem Fahrerhaus des Sattelschleppers betätigbar. Beim Fahren geradeaus kann das Sperrventil von dem Fahrer vom Fahrerhaus aus eingeschaltet werden. Dabei sperrt das Sperrventil den Öldurchfluss zwischen den hydraulischen Kraftverstärkern, wodurch die Gelenkige Verbindung steif wird. Dadurch wird gewährleistet, dass das gesamte Fahrzeug in gerader Linie "gehalten" wird. Beim Biegen wird das Sperrventil durch den Fahrer geöffnet, wodurch ein ungehinderter Durchfluss des Hydrauliköls zwischen den Kammern der beiden Kraftverstärker gesichert ist. Dies sorgt wiederum dafür, dass die gelenkige Verbindung des schiebbaren Teils mit dem Anhänger wieder funktioniert;
8) Die Einführung des neuen Verladungsverfahrens eines Schienenfahrzeugs auf den Sattelauflieger senkt die Verladungskosten. Durch die Anordnung des Schienenfahrzeuggelenks über der gelenkigen Verbindung des schiebbaren Teils mit dem Anhänger erreicht man, dass das komplette Fahrzeug mit dem darauf verladenen Schienenfahrzeug an Wendigkeit gewinnt.

Ein Ausführungsbeispiel des Sattelaufliegers zum Transport von Schienenfahrzeugen und ein Verfahren zur Verladung eines Schienenfahrzeugs auf den Sattelauflieger gemäß der wesentlichen Merkmale der Erfindung ist anhand der beiliegenden Zeichnung veranschaulicht, deren einzelne Figuren zeigen:
- Fig. 1: einen zur Verbindung mit einem Sattelschlepper bestimmten Sattelauflieger, mit einem herausgeschobenen schiebbaren Teil, das mit einem Schwanenhals endet,
- Fig. 2: Draufsicht auf ein Detail der Verbindung des Schwanenhalses mit dem schiebbaren Teil,
- Fig. 3: einen Schnitt A-A durch das schiebbare Teil aus der Fig. 1,
- Fig.4: Detail der Verbindung des Anhängers mit dem schiebbaren Teil, in Draufsicht,
- Fig.5: Schnitt B-B gemäß Fig. 4,
- Fig. 6: Detail der Verbindung des schiebbaren Teils mit dem Anhänger, in einer senkrechten Lage der Drehstützen gegenüber der Längsachse des schiebbaren Teils, in einer perspektivischen Ansicht,
- Fig. 7: die perspektivische Ansicht wie in Fig. 6, jedoch mit parallel zur Längsachse des schiebbaren Teils angeordneten Drehstützen,
- Fig. 8: Seitenansicht auf einen zusammengesetzten Satz, bestehend aus dem schiebbaren Teil und dem Anhänger,
- Fig. 9: Detail "A" gemäß Fig. 8,
- Fig. 10: das schiebbare Teil in einer perspektivischen Ansicht,
- Fig. 11: Detail "B" gemäß Fig. 10,
- Fig. 12: Anordnung des einstellbaren Arms auf der Drehscheibe am Schwanenhals, in einer perspektivischen Ansicht,
- Fig. 13: Anordnung wie in Fig. 12, jedoch von oben gesehen, mit der sich in einer Anfangsposition befindenden Drehscheibe des Schwanenhalses,
- Fig. 14: einen Schnitt E-E durch die in Fig. 13 gezeigte Kolbenstange des Schwanenhalses,
- Fig. 15: Anordnung wie in Fig. 13, von oben gesehen, mit einer um 45° umgedrehten Drehscheibe,
- Fig. 16: Anordnung wie in Fig. 13, von oben gesehen, mit einer um 45° umgedrehten Drehscheibe, bei der der einstellbare Bolzen sich in einer verkürzten Position gegenüber der Achse der Drehscheibe befindet,
- Fig. 17: Teil der gelenkigen Verbindung des schiebbaren Teils mit dem Anhänger, in einer perspektivischen Ansicht von unten,
- Fig. 18: das Teil gemäß Fig. 17, jedoch in Seitenansicht,
- Fig. 19: einen Schnitt C-C gemäß Fig. 18,
- Fig. 20: das schiebbare Teil und der Anhänger, verschwenkt zueinander um 27°, in einer Ansicht von oben,
- Fig. 21: das schiebbare Teil und der Anhänger, verschwenkt zueinander um 20°, ebenso in einer Ansicht von oben,
- Fig. 22: einen Blockschaltplan der Steuerung des Sperrventils sowie seinen Anschluss an die in der gelenkigen Verbindung befindliche hydraulische Kraftverstärker,
- Fig. 23: Anordnung des Sperrventils an einem Teil des Gelenkfahrzeuges, das den Anhänger mit dem schiebbaren, mit dem Schwanenhals gekoppelten Teil bei Geradeausfahrt in einer Draufsicht auf das Gelenkfahrzeug zeigt,
- Fig. 24: Detail 15A gemäß Fig. 23, das die gelenkige Verbindung darstellt,
- Fig. 25: Anordnung des Spenventils an dem Anhänger an der Verbindungsstelle des Anhängers mit dem herausgeschobenen, in den Schwanenhals auslaufenden Teil, bei einer Kurvenfahrt des Gelenkfahrzeuges,
- Fig. 26: Detail 15A gemäß Fig. 25, das die gelenkige Verbindung darstellt,
- Fig. 27: einen Verladevorgang eines Schienenfahrzeugs auf den Sattelauflieger, in einer Seitenansicht, und
- Fig. 28: das Schienenfahrzeug nach seiner Verladung auf den Sattelauflieger, in einer Seitenansicht.

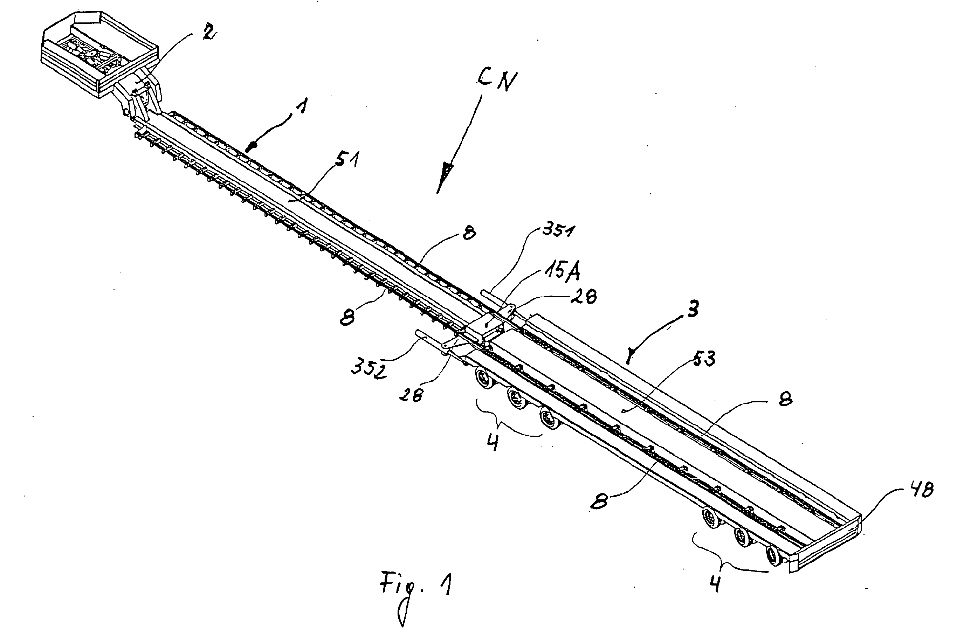

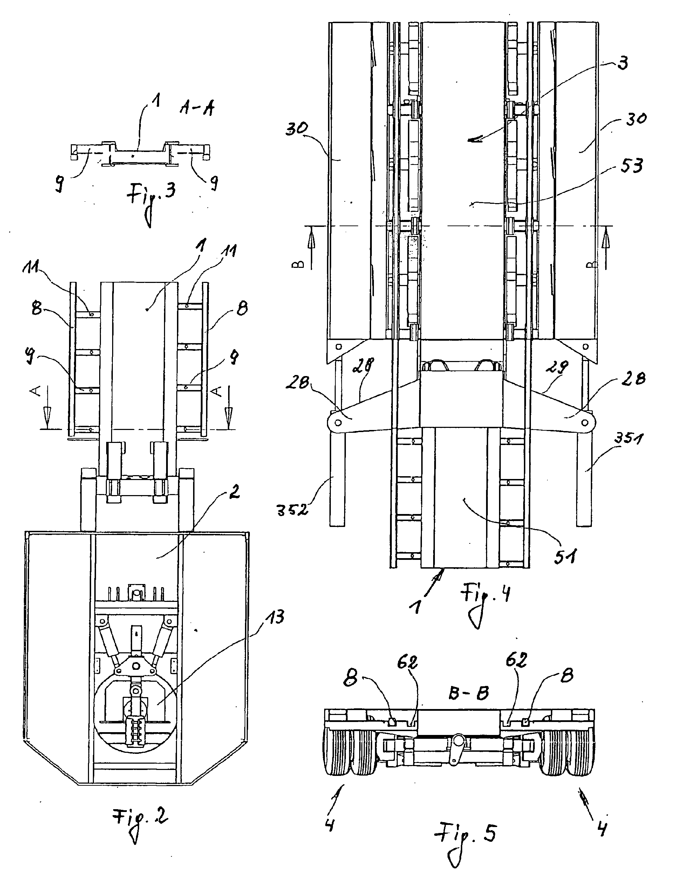

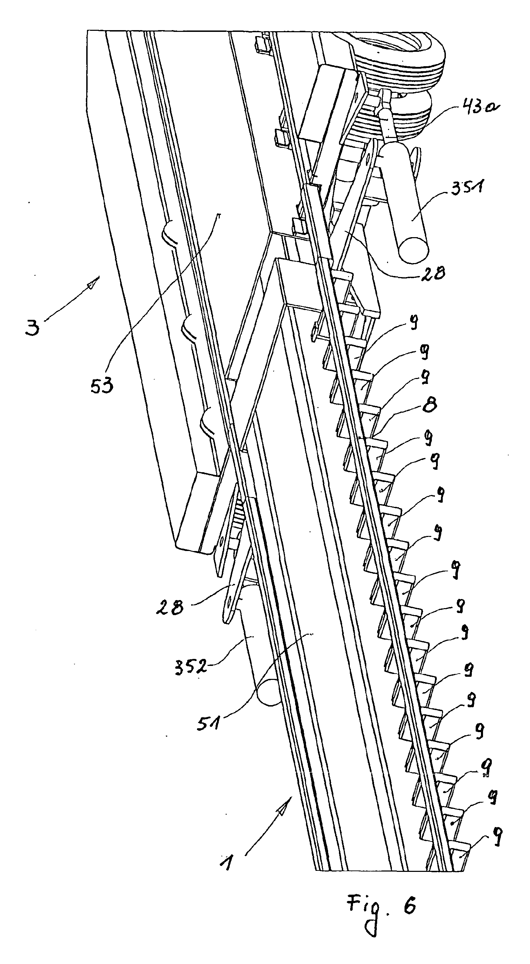

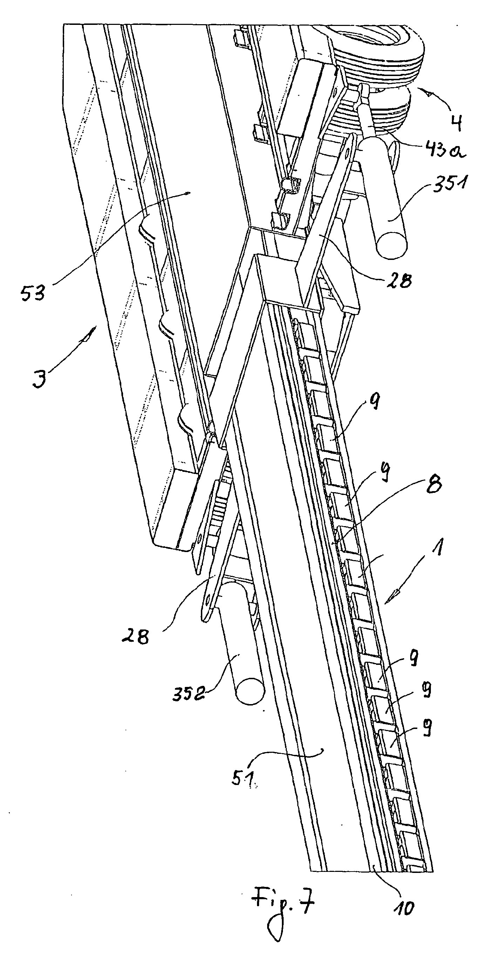

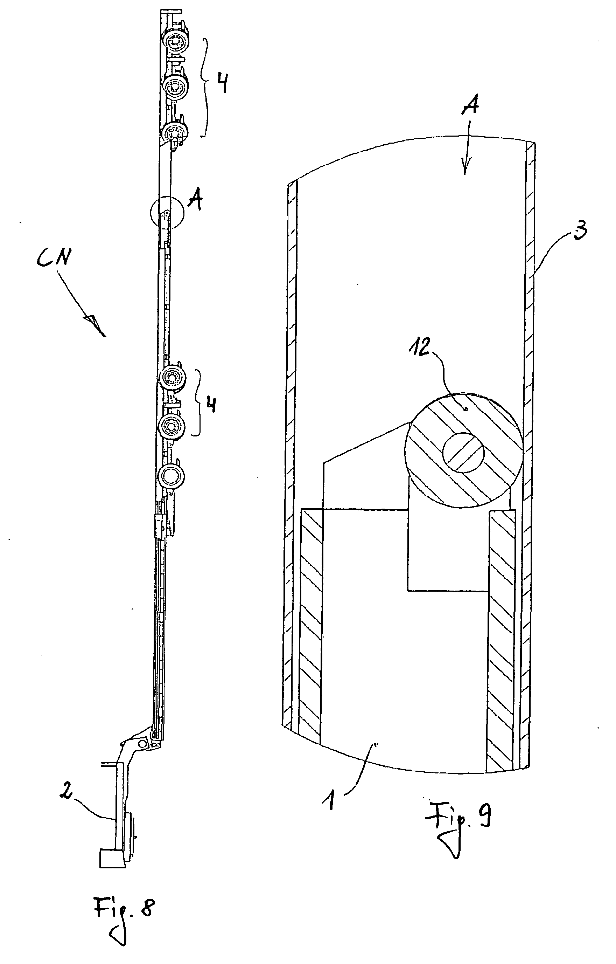

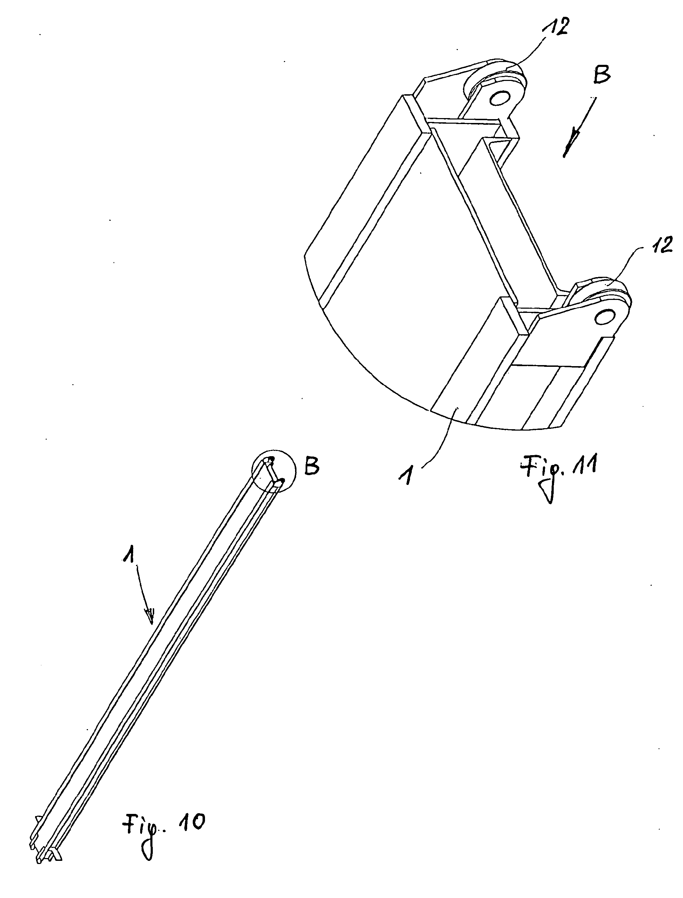

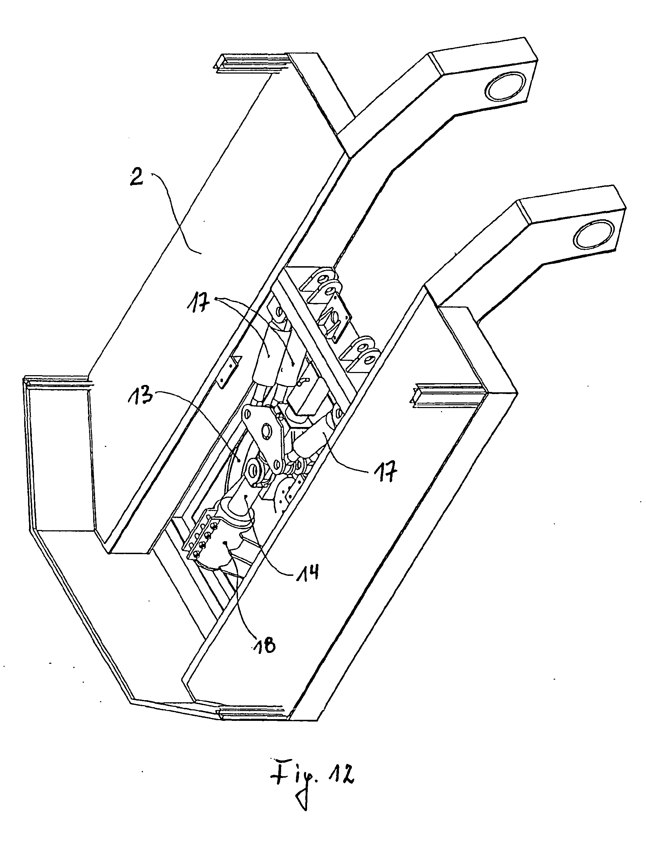

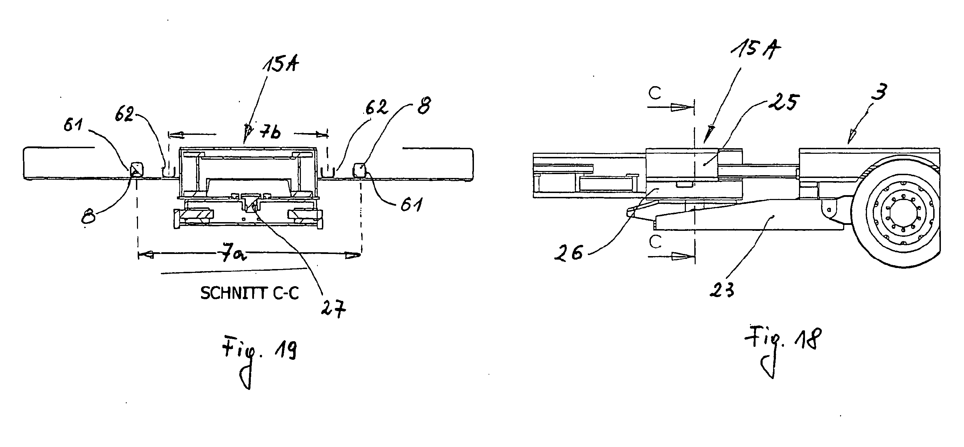

Der im Ausführungsbeispiel in Figuren 1 bis 21 dargestellte Sattelauflieger CN zur Beförderung von Schienenfahrzeugen weist ein schiebbares Teil 1 auf, das vorne mit einem bekannten, zur Verbindung mit einem Sattelschlepper ( nicht dargestellt) geeigneten Schwanenhals 2 endet und an seinem anderen Ende gelenkig mit einem Anhänger 3 verbunden ist. Der Anhänger 3 weist Achsen mit Rädern 4 auf. Auf der ganzen Länge einer oberen Fläche 51 des schiebbaren Teils 1 und einer oberen Fläche 53 des Anhängers 3 erstrecken sich C-Profile 61 und 62, die zur Aufnahme von Fahrschienen 8 in zwei verschiedenen Standardabständen 7a und 7b vorgesehen sind (vgl. Figuren 4 und 5), wobei die an dem schiebbaren Teil 1 befindlichen Fahrschienen 8 auf seinen beiden Seiten auf Drehstützen 9 aufgesetzt sind, welche ein ungehindertes Hineinschieben des schiebbaren Teils 1 in den Anhänger 3 ermöglichen, und zwar zusammen mit den einmontierten Fahrschienen 8. Dies wird durch die Einstellung der Drehstützen 9 parallel zum Träger 10 des schiebbaren Teils 1 erreicht. Die Drehstützen 9 sind drehbar an Bolzen 11 aufgesetzt. Diese Maßnahmen ermöglichen das Schieben des schiebbaren Teils 1 ohne Demontage der Fahrschienen 8 in den Anhänger 3 hinein, wie es in Figuren 6 und 7 dargestellt ist. Das Hineinschieben wird auch durch die am Ende des schiebbaren Teils 1 angeordneten Rollen 12 erleichtert (vgl. Figuren 8 bis 11), die den Schubwiderstand verringern.

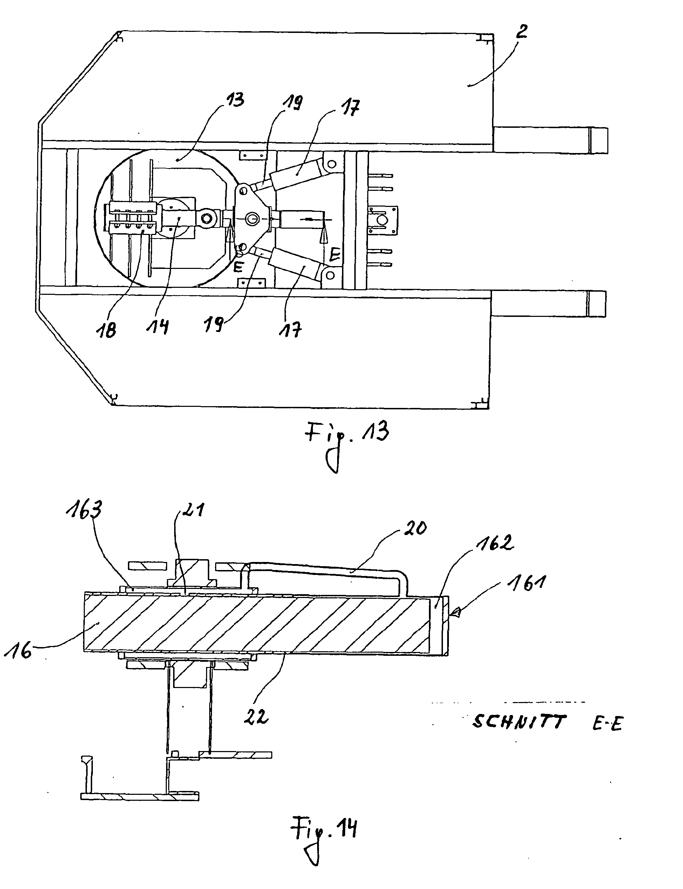

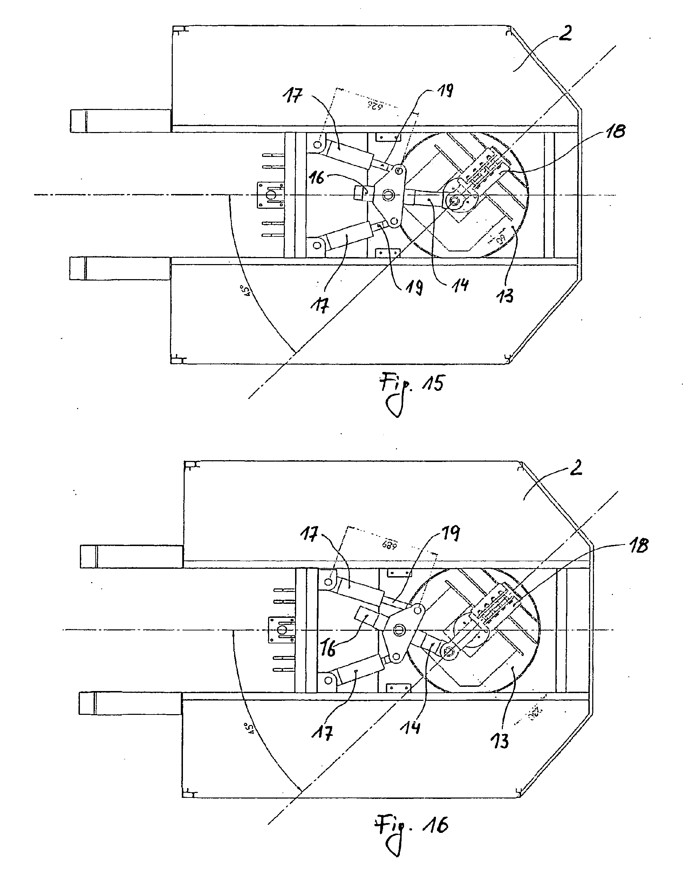

An dem die Drehscheibe 13 enthaltenden Teil des Schwanenhalses 2 ist ein stetig regulierbarer Arm 14 des Räderlenkungssystems vorgesehen. Die gelenkige Verbindung 15A des schiebbaren Teils 1 mit dem Anhänger 3 erfordert keine übermäßig große Schwenkbewegung der Achse mit Rädern 4 im Anhänger 3. Bis jetzt wurde verwendet eine steife Verbindung des Armes, in der Regel von einer Länge von 230 mm, bemessen von dem Drehpunkt der Drehscheibe 13 bis zur Verbindungsstelle mit der Drehung-Kolbenstange 16, die wiederum mit den Kraftverstärkern 17 verbunden ist. Dies verursachte eine stetige Drehung, die von der Schwenkbewegung des Sattelschleppers gegenüber dem Anhänger 3 abhängig war. Das Ersetzen des steifen Armes durch einen hydraulischen Kraftverstärker 18 mit einem regulierbaren Arm 14 ermöglicht eine stetige Regulierung der Länge des Armes 14. Dadurch wird nach Bedarf, in Verbindung mit den Kraftverstärkern 17 des Lenkungssystems für die Räder für Winkeländerungen gesorgt. Die Funktionsweise des stetig regulierbaren Armes 14 ist in Figuren 15 und 16 zu sehen. Beim Drehen der Drehscheibe 13 um einen Drehwinkel von 45°, wenn der regulierbare Arm 14 sich in der in Fig. 15 gezeigten Lage befindet, beträgt der Hub des Kolbens 19 im Kraftverstärker 17 689 mm. Dagegen beim Verkürzen des regulierbaren Armes 14 der Hub beträgt nur 626 mm (vgl. Fig. 16). Dadurch wird eine Verkleinerung des Drehwinkels der Achse mit Rädern 4 im Anhänger 3 erreicht, weil in einem solchen Fall die gelenkige Verbindung 15 einen Teil der Drehung übernimmt. Zwecks einer reibungslosen Funktionsweise des Steuerungsmechanismus im Schwanenhals 2 ist eine stetige Schmierung der Drehung-Kolbenstange 16 gesichert, die während der Drehung des Schleppers sich entlang ihrer Achse bewegt. Die Kolbenstange ist in einen Behälter 161 eingebaut, der aus zwei Teilen 162 und 163 besteht. Das Behälterteil 162 ist mit Öl gefüllt, das während der Bewegung der Kolbenstange 16 aus dem Teil 162 verdrängt und mittels eines Hydraulikschlauches 20 in das Teil 163 befördert wird. Diese Maßnahme gewährleistet die Schmierung der Drehung-Kolbenstange 16 über die Öffnung 21 in der Hülse 22, wie es in Fig. 14 als Schnitt E-E dargestellt ist.

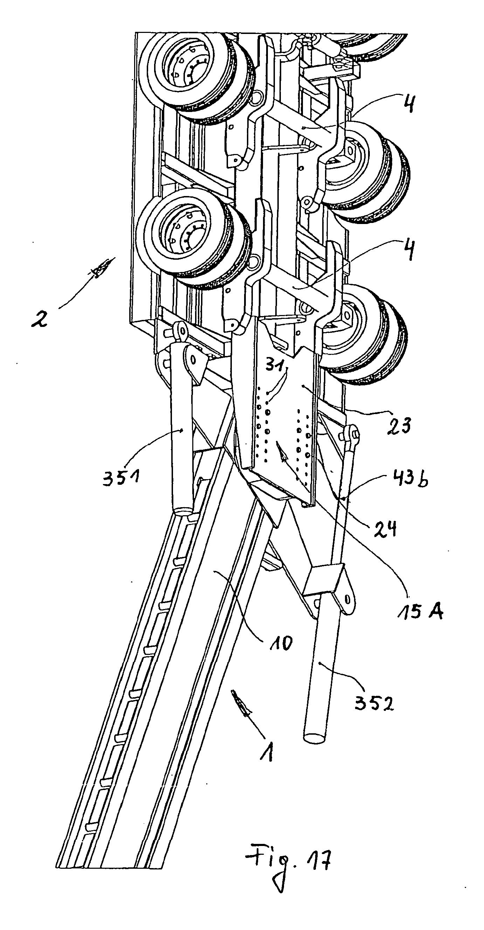

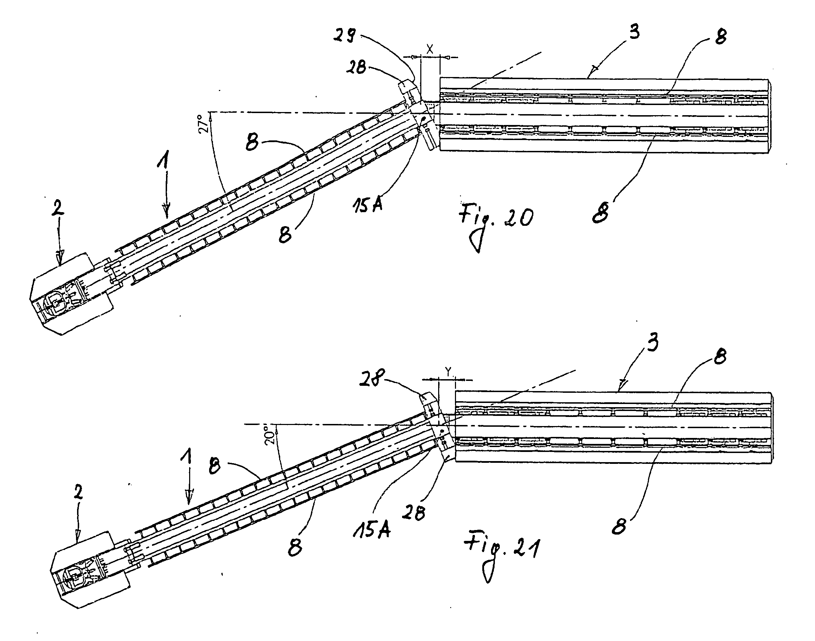

Die in Figuren 17 bis 19 dargestellte gelenkige Verbindung 15A besteht aus einem Profilbalken 23 des Anhängers 3, an welchem Profilbalken 23 mithilfe von Schrauben 24 ein für den Lastkraftwagen normtypischer Sattel 25 befestigt ist, dessen bewegliches Teil 26 mit dem Anhänger 3 über einen normtypischen Königszapfen 27 verbunden ist. Eine solche Verbindung erlaubt ein einfaches Abbiegen, wie es bei herkömmlichen Verbindungen eines typischen Sattelaufliegers mit Sattelschlepper der Fall ist. Das schiebbare Teil 1 ist bei dieser gelenkigen Verbindung beidseitig mit schräg angeordneten Vorsprüngen 28 mit Schrägflächen 29 ausgestattet, die beim Abbiegen sich an der Konstruktion 30 des Anhängers 3 abstützen und für eine Drehbegrenzung sorgen. Die Drehbegrenzung wird ebenfalls durch verschiedene Anordnungen des Sattels 25 auf dem Profilbalken 23 reguliert. Dies wird durch unterschiedliche Abstände zwischen den Öffnungen 31 im Profilbalken 23 ermöglicht. Je weiter der Sattel 25 auf dem Profilbalken 23 befestigt ist, desto größer ist der Drehwinkel. Die gelenkige Verbindung 15A sichert eine Knickung des gesamten Fahrzeug-Satzes bis max. 27°, wie es in Fig. 20 zu sehen ist. Dies betrifft eine Endlage des auf dem Profilbalken 23 befestigten Sattels 25, bei der ein Abstand X zwischen dem schiebbaren Teil 1 und dem Anhänger 3 am größten ist. Bei Anbringung des Sattels 25 in eine andere Position auf dem Profilbalken 23 wird ein kleinerer Knickwinkel erreicht und der Abstand Y wird kleiner, wie es der Fig. 21 zu entnehmen ist. Dieses Konzept erlaubt ein leichteres Manövrieren in engen Durchfahrtsstraßen.

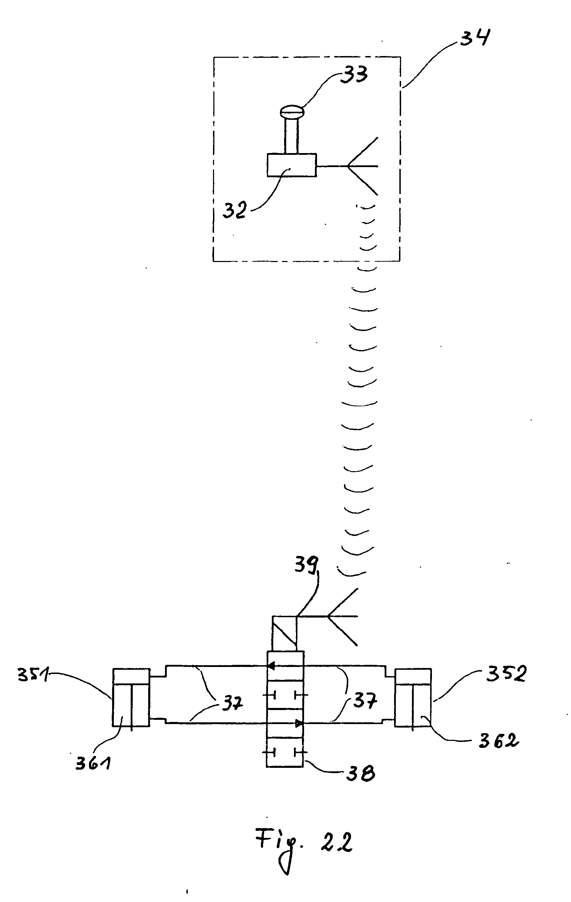

Eine vorteilhafte Ausführung des für den Sattelauflieger CN geeigneten Steuerungssystems ist in Fig. 22 dargestellt. Das Steuerungssystem weist einen kabellosen Sender 32 auf, der mithilfe eines Schalters 33 von Fahrerhaus 34 aus betätigbar ist. Weiterhin enthält das Steuerungssystem zwei hydraulische Kraftverstärker 351 und 352, die an der gelenkigen Verbindung 15A installiert sind. Die Kraftverstärker 351 und 352 weisen Hydrauliköl-Kammern 361 und 362 auf, die miteinander über einen Hydraulikschlauch 37 mit Sperrventil 38 verbunden sind. Das Sperrventil ist wiederum mit einem Signalempfänger 39 ausgestattet, mit dem das Sperrventil durch den Sender 32 betätigbar ist.

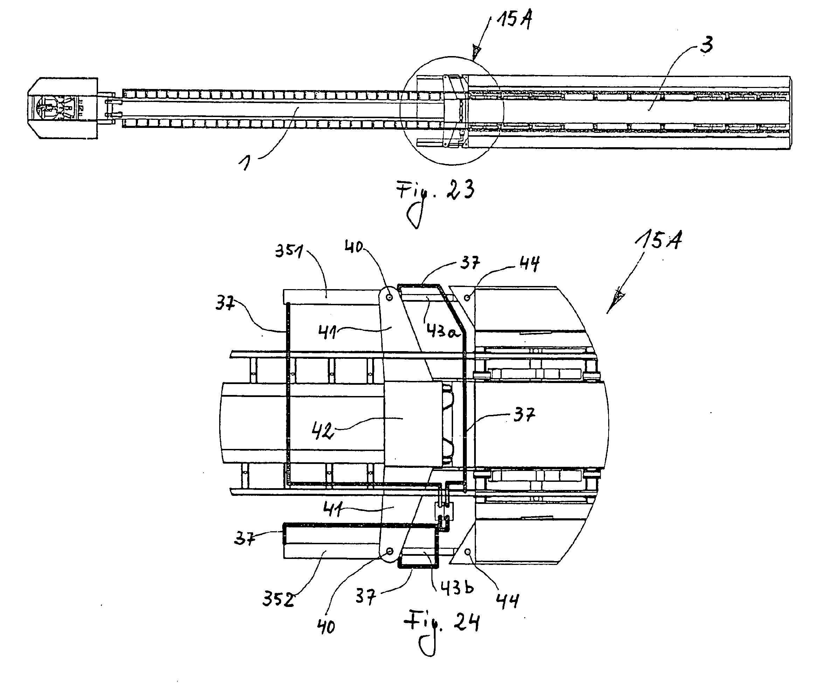

In Figuren 23 bis 25 ist eine Anordnung der Kraftverstärker 351 und 352 an der gelenkigen Verbindung 15A gezeigt. Dabei sind die Kraftverstärker drehbar an ihren Verbindungsstellen 40 mit den Armen 41 der Drehplattform 42 des schiebbaren Teils 1 befestigt. Die herausschiebbaren Kolben 43a und 43b der hydraulischen Kraftverstärker 351 und 352 sind drehbar an ihren Verbindungsstellen 44 mit dem Anhänger 3 verbunden.

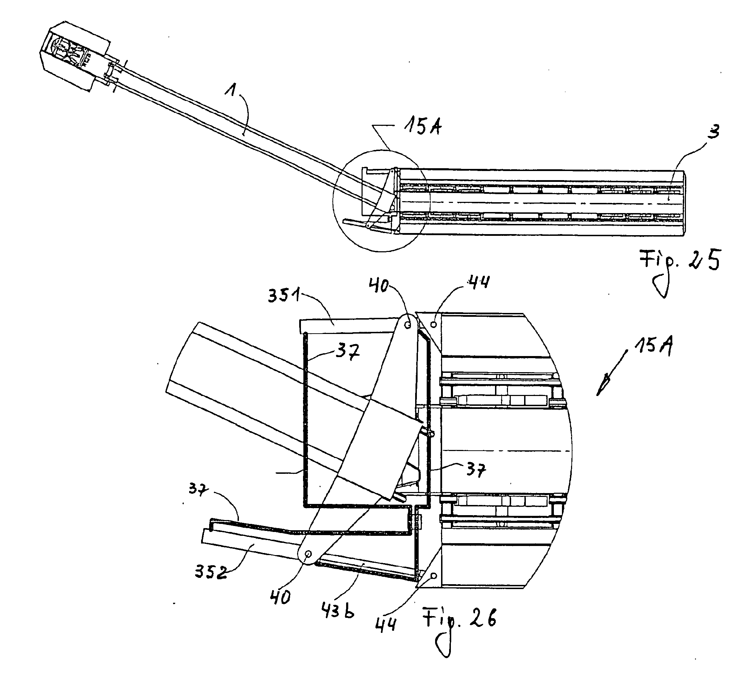

Im in Fig. 23 dargestellten Ausführungsbeispiel wird das Sperrventil 38 bei der Geradeausfahrt von dem Fahrer gesperrt, indem er kabellos ein Signal vom Sender 32 sendet. Dadurch bewirkt man, dass der Durchfluss des Hydrauliköls in den die beiden hydraulischen Kraftverstärker 351 und 352 verbindenden Hydraulikschläuchen 37 blockiert wird, was gleichzeitig eine Drehblockade der gelenkigen Verbindung 15A bedeutet. Bei Kurvenfahrten dagegen wird das Sperrventil 38 geöffnet und die gelenkige Verbindung 15A aktiviert, wie es in Fig. 25 gezeigt ist.

Das gezeigte Ausführungsbeispiel erschöpft nicht alle möglichen Ausführungsvarianten der Erfindung. So könnte man beispielsweise die kabellose Fernsteuerung des Sperrventils 38 durch eine Steuerung mithilfe einer elektrischen Leitung ersetzen.

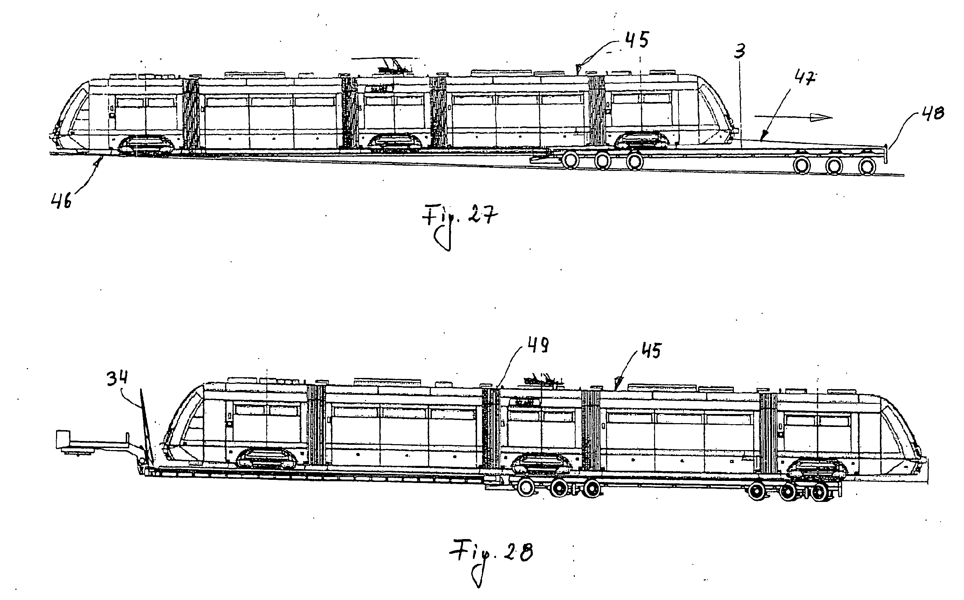

Ein Ausführungsbeispiel des Verfahrens zur Verladung eines Schienenfahrzeugs 45 auf den Sattelauflieger CN ist in Figuren 27 und 28 dargestellt. Der Sattelauflieger besteht aus einem schiebbaren Teil 1 und einem Anhänger 3. Das schiebbare Teil 1 wird von dem Schwanenhals 2 abgekoppelt und das Schienenfahrzeug 45 wird von der Seite des schiebbaren Teils 1 hineingezogen, wobei das schiebbare Teil 1 vorher nach unten verschwenkt und mit einer kurzen Auffahrrampe 46 verbunden wird, der Anhänger 3 in Richtung schiebbares Teil 1 mithilfe der Achsregulierung der Achse mit Rädern 4 des Anhängers 3 geneigt wird, das Hineinziehen des Schienenfahrzeugs 45 mithilfe eines einerseits mit dem Schienenfahrzeug 45 und andererseits mit einer Seilwinde (nicht gezeigt) gekoppelten Seils 47 erfolgt, das entlang des Gleises geführt ist. Die Seilwinde ist im hinteren Teil des Anhängers 3 angeordnet, wobei im besagten hinteren Teil des Anhängers 3 auch ein an die Konstruktion 30 des Anhängers 3 befestigter Begrenzer 48 angeordnet ist, mit dem ein übermäßiges Hineinziehen des Schienenfahrzeugs 45 gehindert wird. Das Schienen-Gelenkfahrzeug wird am Sattelauflieger CN derart befestigt, dass die gelenkige Verbindung 49 des Schienenfahrzeugs 45 sich oberhalb der gelenkigen Verbindung 15A des schiebbaren Teil 1 mit dem Anhänger 3 des Sattelaufliegers CN befindet. Eine solche Anordnung erlaubt ungehinderte Abbiegungen während des Transports, sogar bei einer steifen Befestigung des Schienenfahrzeugs am Sattelauflieger CN.

Der im Ausführungsbeispiel der Erfindung dargestellte Sattelauflieger CN zur Beförderung von Schienenfahrzeugen gemäß der wesentlichen Merkmale der Erfindung erschöpft nicht alle möglichen Ausführungsvarianten. Die vorliegende ausführliche Beschreibung seiner vorzugsweise gewählten Variante sollte nicht als eine Einschränkung der im Hauptteil der Beschreibung dargestellten grundsätzlichen Idee der Erfindung interpretiert werden.

## Patentansprüche

1. Sattelauflieger, bestehend aus einem schiebbaren Teil, das einen Schwanenhals zur Verbindung mit einem Sattelschlepper beinhaltet und aus einem mehrachsigen Anhänger, welcher Sattelauflieger zur Beförderung von langen Schienenfahrzeugen bestimmt ist, **dadurch gekennzeichnet, dass** das schiebbare Teil (1) mit dem Anhänger (3) gelenkig verbunden ist, wobei der Anhänger (3) Achsen mit Rädern (4) aufweist und dass auf der ganzen Länge der oberen Fläche (51) des schiebbaren Teils (1) sowie des Anhängers (3) in wenigstens zwei einstellbaren Standardabständen (7a, 7b) Fahrschienen (8) angeordnet sind, wobei die an dem schiebbaren Teil (1) befindlichen Fahrschienen (8) auf seinen beiden Seiten auf Drehstützen (9) aufgesetzt sind, welche ein ungehindertes Hineinschieben des schiebbaren Teils (1) in den Anhänger (3) ermöglichen, wobei an dem eine Drehscheibe (13) enthaltenden Teil des Schwanenhalses (2) ein stetig regulierbarer Arm (14) vorgesehen ist, der am Drehpunkt der Drehscheibe (13) gelagert ist und in Verbindung mit Kraftverstärkem (17) eines Lenkungssystems für Achse mit Rädern (4) nach Bedarf für Winkeländerungen sorgt.

2. Sattelauflieger nach Anspruch 1, **dadurch gekennzeichnet, dass** die gelenkige Verbindung (15 A) des schiebbaren Teils (1) mit dem Anhänger (3) einen normtypischen Königszapfen (27) aufweist, der an einem für den Lastkraftwagen normtypischen Sattel (25) angebracht ist, welcher Sattel wiederum verstellbar mithilfe von Schrauben (24) an einem Profilbalken (23) des Anhängers (3) befestigt ist, wodurch die Drehregulierung des schiebbaren Teils (1) gegenüber dem Anhänger (3) ermöglicht ist, wobei das schiebbare Teil (1) beidseitig mit schräg geformten, zur Drehbegrenzung vorgesehenen Vorsprüngen (28) ausgestattet ist.

3. Sattelauflieger nach Anspruch 1, **dadurch gekennzeichnet, dass** die auf beiden Seiten des schiebbaren Teils (1) aufgesetzten Drehstützen (9), an denen die Fahrschienen (8) befestigt sind, zwischen einer senkrechten Lage und einer parallelen Lage gegenüber dem schiebbaren Teil (1) schwenkbar sind, wobei die Stützen (9) wenigstens zwei Abstände (7a, 7b) für das Aufsetzen der Fahrschienen (8) aufweisen, welche Abstände an zwei am Anhänger (3) vorgesehene, identische Abstände (7a, 7b) zwischen C-Profilen zur Aufnahme von Fahrschienen (8) angepasst sind.

4. Sattelauflieger nach Anspruch 1, **dadurch gekennzeichnet, dass** das schiebbare Teil (1) an seinem Ende mit den Schubwiderstand verkleinernden Rollen (12) versehen ist.

5. Sattelauflieger nach Anspruch 1, **dadurch gekennzeichnet, dass** die Drehscheibe (13) des Schwanenhalses (2) eine permanent geschmierte, in einen Ölbehälter (161) eingebaute Lenkung-Kolbenstange (16) aufweist, welcher Ölbehälter aus zwei Teilen (162, 163) besteht, die über einen Hydraulikschlauch (20) mit einem Abdeckteil der Kolbenstange (16) verbunden sind, wobei an dem Abdeckteil und an einer Verbindungsstelle der Kolbenstange (16) mit einer Hülse (22), in die die Kolbenstange (16) eingesetzt ist, eine Öffnung (21) angeordnet ist.

6. Sattelauflieger nach Anspruch 1, **dadurch gekennzeichnet, dass** an der gelenkigen Verbindung (15A) des schiebbaren Teils (1) mit dem Sattelauflieger (CN) ein zusätzliches Steuerungssystem installiert ist, das aus zwei hydraulischen Kraftverstärkem (351, 352) besteht, deren Hydrauliköl-Kammern (361, 362) miteinander über einen Hydraulikschlauch (37) mit Sperrventil (38) verbunden sind, welches Sperrventil von dem Fahrerhaus (34) des Sattelschleppers betätigbar ist.

7. Sattelauflieger nach Anspruch 7, **dadurch gekennzeichnet, dass** das Sperrventil (38) kabellos von dem Fahrerhaus (34) des Sattelschleppers mithilfe eines kabellosen Senders (32) ferngesteuert ist, welcher Sender über einen Schalter (33) betätigbar ist, und dass das Sperrventil (38) einen Signalempfänger (39) aufweist.

8. Sattelauflieger nach Anspruch 7, **dadurch gekennzeichnet dass** die an der gelenkigen Verbindung (15A) angeordneten hydraulischen Kraftverstärker (351, 352) drehbar an den Verbindungsstellen (40) der Arme (41) einer Drehplattform (42) des schiebbaren Teils (1) befestigt sind, und dass die hydraulischen Kraftverstärker (351, 352) herausschiebbare Kolben (431, 43b) aufweisen, die an ihren Verbindungsstellen (44) drehbar mit dem Anhänger (3) verbunden sind.

9. Verfahren zur Verladung eines Schienenfahrzeugs auf einen Sattelauflieger,
**dadurch gekennzeichnet, dass**
- das schiebbare Teil (1) von dem Schwanenhals (2) abgekoppelt und das Schienenfahrzeug (45) von der Seite des schiebbaren Teils (1) hineingezogen wird, wobei das schiebbare Teil (1) vorher nach unten verschwenkt und mit einer kurzen Auffahrrampe (46) verbunden wird,
- der Anhänger (3) in Richtung schiebbares Teil (1) mithilfe der Achsregulierung der Achse (4) des Anhängers (3) geneigt wird,
- das Hineinziehen des Schienenfahrzeugs (45) mithilfe eines einerseits mit dem Schienenfahrzeug (45) und andererseits mit einer Seilwinde gekoppelten Seils (47) erfolgt, das entlang des Gleises geführt ist, wobei die Seilwinde im hinteren Teil des Anhängers (3) angeordnet ist, und wobei im hinteren Teil des Anhängers (3) ein an die Konstruktion (30) des Anhängers (3) befestigter Begrenzer (48) angeordnet ist, mit dem ein übermäßiges Hineinziehen des Schienenfahrzeugs (45) gehindert wird.

10. Verfahren zur Verladung eines Schienenfahrzeugs auf einen Sattelauflieger nach Anspruch 9, **dadurch gekennzeichnet, dass** das gelenkige Schienenfahrzeug (45) an dem Sattelauflieger (CN) derart befestigt wird, dass eine gelenkige Verbindung (49) des Schienenfahrzeugs (45) oberhalb der gelenkigen Verbindung (15A) des schiebbaren Teils (1) mit dem Anhänger (3) liegt.

## Claims

1. A commercial vehicle semitrailer consisting of a retractable part and containing a swan neck for a flexible coupling with a tractor and a multi-axis semitrailer part aimed at transporting long rail-vehicles **characterized in that** the retractable part (1) is connected via an articulated joint with the semitrailer part (3) containing axles with wheels (4), on the entire length of the upper surface (5) of the retractable part (1) and the semitrailer part (3) adjustable mobile rails (8) with at least two normalised gaps (7a, 7b) and the mobile rails (8) on the retractable part (1) are seated on its both sides on pivoting supports (9) enabling the retractable part (1) to be freely inserted into the semitrailer part (3) and, within a certain section of the swan neck (2) containing a disk turntable (13) smoothly adjustable arm (14) has been used from the middle of the turntable turn (13), which, in connection with actuators (17) to the wheel axle turn (4) makes it possible to obtain variable turn angles, depending on current needs.

2. A commercial vehicle semitrailer, according to claim 1, **characterized in that** the articulated joint (15 A) of the retractable part (1) with the semitrailer part (3) provides a coupling by means of standard coupling pin (27) which is attached to a standard coupling (25) used in lorries which is attached by means of screws (24), in an adjustable manner, to a profile beam (23) of the semitrailer part (3), which facilitates adjustment of the retractable part (1) turn in relation to the semitrailer part (3), however, the retractable part (1) is equipped, on both sides, with diagonally formed projections (28) which limit the turn angle.

3. A commercial vehicle semitrailer, according to claim 1, **characterized in that** the rotational supports (9) seated on both sides of the retractable part (1) on which mobile rails are attached (8) may be turned from a perpendicular position to a parallel position in relation to the retractable part (1) and these supports have at least two gaps (7a, 7b) to attach the mobile rails (8) adjusted to two identical gaps (7a, 7b) located in the semitrailer part (3) in the form of U-sections adapted in a manner making it possible to seat mobile rails (8) in them.

4. A commercial vehicle semitrailer, according to claim 1, **characterized in that** the structure of the retractable part (1) is equipped, in its end section, with rollers (12) decreasing the travel resistance.

5. A commercial vehicle semitrailer, according to claim 1, **characterized in that** the disk turntable (13) of the swan neck (2) contains fixed lubricating points for the turn piston rod (16) built in the oil tank (161) consisting of two parts (162,163) connected with a hydraulic hose (20) with a part shielding the piston rod (16) with a hole (21) formed in the location where the piston rod is connected with the sleeve (22) in which the piston rod (16) is seated.

6. A commercial vehicle semitrailer, according to claim 1, **characterized in that**: the articulated joint (15 A) between the part (1) retractable from the commercial vehicle semitrailer (CN) and the commercial vehicle semitrailer (CN) an additional control system consisting of two hydraulic actuators (351, 352) whose hydraulic oil chambers (361,362) are interconnected by means of a hydraulic hose (37) through a shut-off valve (38) controlled from the tractor cab (34).

7. A commercial vehicle semitrailer, according to claim 7, **characterized in that** the shut-off valve (38) is remotely and wirelessly controlled from the tractor cab (34) by means of a wireless transmitter (32) activated by a switch (33) and the shut-off valve (38) contains a signal receiver (39).

8. A commercial vehicle semitrailer, according to claim 7, **characterized in that** the articulated joint (A) contains hydraulic actuators (4, 41) which are connected pivotally in their coupling sections (9) with the arms (10) of the rotary platform (11) of the retractable part (12), however, the retractable pistons (4a, 4la) of hydraulic actuators (4, 41) are pivotally connected with the semitrailer part (3) in their coupling sections (14).

9. A method of loading a trail-vehicle on the commercial vehicle semitrailer **characterized in that** the retractable part (1) is decoupled from the swan neck (2) and the rail-vehicle (45) is pulled in from the side of the retractable part (1) which is previously tilted down to connect it with a make-shift short approach platform (46) and the semitrailer part (3) is also previously tilted towards the retractable part (1) by means of the axle adjustment system (4) of the semitrailer part (3) and a rail-vehicle (45) is pulled in within the track line by means of a rope (47) attached, on one side, to the rail-vehicle (35) and, on the other side, to a hoisting winch located at the rear of the semitrailer part (3) and the rear of the semitrailer part (3) also features a limiter (48) attached to its structure (30) which prevents the rail-vehicle (45) from being pulled in too far.

10. A method of loading a trail-vehicle on the commercial vehicle semitrailer, according to claim 10, **characterized in that** an articulated rail-vehicle (45) is fixed on a commercial vehicle semitrailer (CN) so that the articulated joint (49) of the rail-vehicle (45) is located over the articulated joint (15 A) between the retractable part (1) and the semitrailer part (3).

## Revendications

1. Semi-remorque comprenant une partie escamotable avec un col de cygne pour atteler au tracteur par l'intermédiaire d'une sellette et une partie arrière de plusieurs essieux pour le transport des véhicules ferroviaires longs, **caractérisée en ce que** la partie escamotable (1) est articulée à la partie arrière (3) comprenant les essieux avec les roues (4) et que sur toute la longueur de la surface supérieure (5) de la partie escamotable (1) et de la partie arrière (3) sont montés les rails de roulement (8) réglables de façon à obtenir au moins deux écartements normalisés (7a, 7b), les rails de roulement (8) de la partie escamotable (1) étant montés de ses deux côtés sur les supports rotatifs (9) permettant la libre introduction de la partie escamotable (1) dans la partie arrière (3), et que le col de cygne (2) comprenant la plaque tournante (13) possède un bras réglable en continu (14) allant du centre de rotation de la plaque tournante (13), ce qui, en combinaison avec les vérins (17) du système de braquage des essieux (4), permet d'obtenir les angles variables de braquage selon les besoins.

2. Semi-remorque selon la revendication 1, **caractérisée en ce que** l'articulation (15 A) entre la partie escamotable (1) et la partie arrière (3) est réalisée par l'intermédiaire d'un axe d'attelage typique (27) fixé à une sellette typique (25) utilisée dans les camions et fixée de façon réglable avec des vis (24) à la poutre profilée (23) de la partie arrière (3), ce qui permet de régler la position angulaire de la partie escamotable (1) par rapport à la partie arrière (3), la partie escamotable (1) étant équipée de deux saillies en biais (28) sur les deux côtés pour limiter la rotation.

3. Semi-remorque selon la revendication 1, **caractérisée en ce que** les supports rotatifs (9) sur les deux côtés de la partie escamotable (1), auxquels sont fixés les rails de roulement (8), peuvent tourner d'une position perpendiculaire à une position parallèle par rapport à la partie escamotable (1), les supports possédant au moins deux écartements (7a, 7b) pour monter les rails de roulement (8) correspondant à deux écartements identiques (7a, 7b) dans la partie arrière (3), en forme de profilés en U adaptés au montage des rails de roulement (8).

4. Semi-remorque selon la revendication 1, **caractérisée en ce que** l'extrémité de la partie escamotable (1) est équipée des rouleaux (12) qui réduisent la résistance de glissement.

5. Semi-remorque selon la revendication 1, **caractérisée en ce que** la plaque tournante (13) du col de cygne (2) possède le graissage fixe du tige de rotation (16) intégré dans le réservoir d'huile (161) comprenant deux parties (162, 163) raccordées au moyen d'une conduite hydraulique (20) a la partie qui protège le tige de rotation (16) avec un orifice (21) au niveau du raccordement entre le tige et la douille (22) dans laquelle est monté le tige (16).

6. Semi-remorque selon la revendication 1, **caractérisée en ce que** l'articulation (15 A) entre la partie escamotable (1) de la semi-remorque (CN) et la semi-remorque (CN) est munie d'une unité de commande auxiliaire comprenant deux vérins hydrauliques (351, 352) dont les chambres (361, 362) à huile hydraulique sont raccordés au moyen d'une conduite hydraulique (37) par l'intermédiaire d'une vanne d'arrêt (38) contrôlée à partir de la cabine (34) du tracteur.

7. Semi-remorque selon la revendication 7, **caractérisée en ce que** la vanne d'arrêt (38) est télécommandée sans fil à partir de la cabine du tracteur (34) â l'aide d'un émetteur sans fil (32) actionné par un interrupteur (33) et que la vanne d'arrêt (38) comprend un récepteur de signal (39).

8. Semi-remorque selon la revendication 7, **caractérisée en ce que** les vérins hydrauliques (4, 41) de l'articulation (A) sont montés à pivotement dans la zone de raccordement (9) aux bras (10) de la plate-forme tournante (11) de la partie escamotable (12) et que les pistons (4a, 41a) des vérins hydrauliques (4, 41) sont raccordés à pivotement à la partie arrière (3) dans la zone de leur raccordement (14).

9. Méthode de chargement du véhicule ferroviaire sur la semi-remorque, **caractérisée en ce que** la partie escamotable (1) est déconnectée du col de cygne (2) et le véhicule ferroviaire (45) est tiré du côté de la partie escamotable (1) qui, auparavant, est écartée vers le bas et combinée avec une courte rampe dépliante (46), la partie arrière (3) étant écartée aussi vers la partie escamotable (1) au moyen du réglage des essieux (4) de la partie arrière (3), le tirage du véhicule ferroviaire (45) étant réalisé dans la ligne de la voie au moyen d'un câble (47) accroché d'un côté au véhicule (35) et de l'autre côté à un treuil situé à la queue de la partie arrière (3) où se trouve aussi une butée (48) fixée à la structure (30) qui empêche le glissement trop loin du véhicule ferroviaire (45).

10. Méthode de chargement du véhicule ferroviaire sur la semi-remorque selon la revendication 10, **caractérisée en ce que** le véhicule ferroviaire (45) articulé est fixé sur la semi-remorque (CN) de façon que l'articulation (49) du véhicule ferroviaire (45) soit située au-dessus de l'articulation (15 A) entre la partie escamotable (1) et la partie arrière (3).
